(19) Europäisches Patentamt
European Patent Office
Office européen des brevets

(11) Numéro de publication : **0 013 687**
**B1**

(12) **FASCICULE DE BREVET EUROPÉEN**

(45) Date de publication du fascicule du brevet : **18.01.84**

(51) Int. Cl.$^3$ : **G 06 K 9/32**

(21) Numéro de dépôt : **79103701.3**

(22) Date de dépôt : **28.09.79**

(54) **Dispositif permettant l'alignement automatique des caractères dans l'espace vidéo d'un système de reconnaissance de caractères.**

(30) Priorité : **03.11.78 US 957634**

(43) Date de publication de la demande : **06.08.80 Bulletin 80/16**

(45) Mention de la délivrance du brevet : **18.01.84 Bulletin 84/03**

(84) Etats contractants désignés : **CH DE FR GB NL SE**

(56) Documents cités :
**DE-A- 2 053 707**
**DE-A- 2 159 307**
**DE-B- 2 443 670**
**US-A- 3 295 105**
**US-A- 3 539 993**

(73) Titulaire : **International Business Machines Corporation**
**Old Orchard Road**
**Armonk, N.Y. 10504 (US)**

(72) Inventeur : **Schroeder, Eugène, N.**
**3701 Salisbury Drive**
**Lexington, Kentucky 40511 (US)**

(74) Mandataire : **Buff, Henri C.**
**COMPAGNIE IBM FRANCE Département de Propriété Industrielle**
**F-06610 La Gaude (FR)**

**EP 0 013 687 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

# Dispositif permettant l'alignement automatique des caractères dans l'espace vidéo d'un système de reconnaissance de caractères

## Domaine Technique

La présente invention concerne les systèmes de reconnaissance de caractères, et, plus particulièrement, un dispositif permettant d'aligner les caractères avec une plus grande précision aux fins d'un processus de reconnaissance de caractères.

## Etat de la Technique Antérieure

Dans les systèmes de reconnaissance de caractères, si le caractère que l'on désire reconnaître n'est pas correctement aligné par rapport au dispositif de reconnaissance employé, des erreurs peuvent se produire.

Un grand nombre de techniques connues permettent d'aligner l'image, verticalement et horizontalement, dans l'espace vidéo. Par l'expression espace vidéo, il y a lieu de comprendre la partie de la zone balayée par le dispositif de reconnaissance de caractères, qui ne contient, au mieux, que le caractère à reconnaître et, par assimilation, la zone de mémoire qui contient l'image électrique de ce caractère. L'une de ces techniques dépend entièrement de la mise en place mécanique de l'image dans l'espace vidéo. Une autre technique utilise l'espace blanc qui entoure chaque caractère dans l'espace vidéo pour assurer son alignement. Dans une autre de ces techniques, on choisit une ou plusieurs caractéristiques (par exemple la base et l'un des côtés) de l'image analysée et on en fait ensuite la moyenne pour aligner l'image dans l'espace vidéo.

Ces différentes techniques ne permettent pas de prévoir les erreurs d'alignement afférentes aux caractères successifs que l'on désire reconnaître, ni de modifier le réglage du dispositif assurant l'alignement afin de compenser ces erreurs. Par exemple, l'alignement du premier caractère analysé dans l'espace vidéo peut être suffisamment correct pour qu'il puisse être reconnu, mais la ligne analysée peut présenter une légère obliquité par rapport au parcours de l'analyseur, si bien que lorsque l'analyseur se déplace le long de la ligne, les caractères à reconnaître tendent à ne plus se trouver dans l'espace vidéo. Dans les techniques d'alignement classiques, chacun des caractères que comporte cette ligne oblique doit être individuellement aligné avant de pouvoir être reconnu, et le même processus de cadrage doit être répété pour chacun des caractères suivants. Dans ces techniques d'alignement, les informations afférentes au réalignement d'un caractère donné ne sont pas utilisées aux fins du réalignement des caractères suivants, et la nécessité de procéder successivement aux mêmes corrections d'alignement des différents caractères d'une même ligne se traduit par une perte de temps.

Le document US-A-3 539 993 décrit un de ces systèmes de reconnaissance de caractères. Dans le système décrit, le pinceau de balayage balaye deux caractères adjacents de telle façon que les informations d'identification du premier caractère soient engendrées et l'information d'alignement relative au caractère suivant soit détectée. Lorsque le cycle de balayage pour la reconnaissance du premier caractère est achevé, le pinceau de balayage est déplacé vers le caractère suivant en fonction de l'information d'alignement vertical qui vient d'être détectée. Un inconvénient de ce système est la nécessité d'exécuter un double balayage de chaque caractère, correspondant à une perte de temps.

Dans tous ces systèmes de reconnaissance de caractères, chaque caractère doit être aligné verticalement, mais aussi horizontalement lorsque le pas des caractères n'est pas le même que celui utilisé dans l'espace vidéo, ce qui a pour effet d'augmenter l'intervalle de temps requis pour aligner chacun des caractères. Comme précédemment, il en résultera une augmentation de la durée totale de la reconnaissance. Ces techniques ne sauraient donc faciliter ou améliorer l'alignement et la reconnaissance des caractères.

## Exposé de l'Invention

Le terme « caractère » utilisé dans cette demande de brevet ne désigne pas uniquement un caractère alphabétique ou numérique, mais également toute configuration ou graphisme que l'on désire reconnaître et identifier grâce à un système de reconnaissance automatique.

Conformément à l'objet de la revendication n° 1, la présente invention concerne un dispositif permettant l'alignement automatique du caractère à reconnaître à partir d'informations dérivées de la reconnaissance du caractère précédent dans un système de reconnaissance de caractères et comportant des moyens pour convertir un caractère balayé en une suite d'éléments d'image noirs et blancs aux fins de la reconnaissance de caractères individuels, ledit dispositif étant caractérisé en ce qu'il comprend des moyens logiques pour mesurer les coordonnées d'au moins une caractéristique d'alignement (centre du cadre) choisie appartenant au caractère à reconnaître inscrit dans une région discrète donnée (espace vidéo), des moyens de mémorisation emmagasinant les coordonnées idéales de cette même caractéristique d'alignement pour chaque caractère à reconnaître, des moyens logiques de calcul pour calculer les différences entre les coordonnées mesurées et les coordonnées idéales afférentes à la caractéristique d'alignement du caractère à reconnaître, et des moyens pour ajuster les coordonnées de la caractéristique d'alignement du caractère à reconnaître suivant en fonction des différences calculées entre coordonnées mesurées et coordonnées idéales afin d'aligner les caractères suivants.

L'un des principaux objectifs de la présente invention est d'augmenter la précision de l'alignement de chacun des caractères par rapport à un espace vidéo aux fins de sa reconnaissance lors de l'analyse d'une ligne de caractères.

Un autre objectif de la présente invention est d'utiliser les informations afférentes à l'alignement du caractère déjà connu pour assurer l'alignement du caractère ultérieur dans l'espace vidéo.

La présente invention permet d'atteindre les objectifs ci-dessus grâce à l'emploi d'un procédé d'alignement adaptatif des caractères qui fait appel à l'emploi des informations afférentes à l'alignement de caractères précédemment reconnus.

Dans le système de reconnaissance de caractères, selon l'invention, comme dans ceux déjà connus, on analyse le caractère à reconnaître et son image est convertie en une suite d'éléments de nature électrique appelés éléments d'image. La zone balayée est généralement plus importante que celle exigée par le caractère que l'on désire reconnaître, de manière à tenir compte de l'imprécision de l'analyseur. Lors de la reconnaissance d'un caractère donné, une partie choisie de la zone analysée est mise dans une zone de mémoire bien définie appelée espace vidéo qui, au mieux, ne contient que les éléments d'image associés à ce caractère. La configuration de ces éléments d'image est ensuite analysée pour déterminer le caractère qu'elle représente, et la représentation codée du caractère ainsi reconnu est transmise alors à des dispositifs auxiliaires.

La précision de l'analyse d'un caractère placé dans l'espace vidéo et la facilité avec laquelle elle peut être effectuée dépendent dans une grande mesure de l'alignement correct de ce caractère. Contrairement aux diverses techniques d'alignement de l'art antérieur qui traitent individuellement chaque caractère, la présente invention utilise les caractéristiques d'alignement des caractères précédemment reconnus aux fins de l'alignement et de la reconnaissance des caractères suivants. L'alignement initial du premier caractère est réalisé au moyen d'une technique connue quelconque. Les caractéristiques d'alignement qui lui sont associées sont calculées et le caractère est ensuite reconnu. Les caractéristiques ainsi calculées sont comparées avec celles du même caractère idéalement aligné (de telles caractéristiques idéales sont emmagasinées dans le système de reconnaissance de caractères pour chaque caractère à reconnaître) et les différences constatées deviennent des valeurs de correction d'alignement pour le caractère suivant qui devrait être aligné dans l'espace vidéo au moyen de la technique classique que l'on utilise. De ce fait, chaque caractère ultérieur est aligné d'une façon plus précise dans l'espace vidéo, ce qui facilite la reconnaissance des caractères et en augmente la fiabilité.

D'autres objets, caractéristiques et avantages de la présente invention ressortiront mieux de l'exposé qui suit, fait en référence aux dessins annexés à ce texte, qui représentent un mode de réalisation préféré de celle-ci.

## Brève Description des Figures

La figure 1 est un schéma synoptique représentant une réalisation d'un système de reconnaissance de caractères utilisé en conjonction avec le procédé d'alignement de la présente invention.

La figure 2 est une représentation du dispositif de segmentation de la figure 1.

Les figures 3 et 4 représentent des variantes du circuit logique de reconnaissance de position des caractéristiques représenté sur la figure 1.

La figure 5 représente un circuit logique connu de reconnaissance de caractères utilisé dans le système représenté à la figure 1.

La figure 6 représente la logique incorporée au calculateur d'erreurs de la figure 1.

La figure 7 représente l'image d'un caractère contenu dans un espace vidéo.

## Description d'un Mode de Réalisation

On a schématiquement représenté sur la figure 1 l'analyseur et les appareils associés que comporte un lecteur optique de caractères. Le système représenté comprend un analyseur de ligne 12, de type classique, qui balaie les caractères qui devront être reconnus au moyen d'une technique classique quelconque. La superficie de la zone balayée est généralement plus importante que celle qui est nécessaire aux seules fins de la reconnaissance d'un caractère donné. Un signal vidéo analogique engendré par l'analyseur 12 sur la ligne 14 est converti en un signal vidéo numérique dans le convertisseur analogique-numérique 16. Ce dernier engendre des signaux d'horloge et de début de balayage qui sont respectivement transmis à l'analyseur 12 sur les lignes 18 et 20. Le convertisseur 16 engendre également des signaux d'horloge afférents aux éléments d'image verticaux et horizontaux respectivement transmis sur les lignes 22 et 24 au dispositif de segmentation 26. Celui-ci reçoit également sur la ligne 23 des signaux indiquant si un élément d'image déterminé est plus sombre ou plus clair qu'un niveau de référence. Initialement, la surface de la zone balayée est généralement plus importante qu'il ne le faudrait aux fins de la reconnaissance d'un caractère donné, de manière à tenir compte de l'imprécision de l'analyseur.

Dans le dispositif de segmentation 26, la totalité de l'information relative à la zone balayée par l'analyseur est transférée de manière à obtenir un espace vidéo dans lequel sera disposé de façon certaine un caractère donné que l'on désire analyser. Un caractère « a » est représenté à l'intérieur de l'espace vidéo 27, figure 7. Un « coin » de ce dernier (par exemple, le coin inférieur gauche) est choisi comme origine. Les différents éléments d'image que comporte l'espace vidéo sont repérés par rapport à cette origine dans les directions x (horizontale) et y (verticale) ; par exemple, un élément d'image dont les coordonnées serait x = 10, y = 20 serait situé dix colonnes à la droite et vingt rangées au-dessus du coin inférieur gauche choisi comme origine.

Le début de la lecture et reconnaissance de caractères commence par la transmission sur les lignes 58 et 60 de signaux de restauration émanant du calculateur d'erreurs 48 qui définissent les origines x et y de l'espace vidéo. Chaque signal d'horloge transmis sur les lignes 22 et 24 fait ensuite augmenter la valeur de deux compteurs 112 et 116 (figure 2) que comporte l'unité de segmentation 26 jusqu'à ce qu'aient été atteintes la rangée supérieure et la colonne la plus à droite, ce qui correspond aux coordonnées du coin supérieur droit de l'espace vidéo. Le signal de sortie vidéo du dispositif 26, qui n'est autre qu'un bit « 1 » ou « 0 » selon que l'élément d'image est plus sombre ou plus clair que le niveau de référence ainsi qu'il est dit plus haut, n'est transmis sur la ligne 28 que lorsque les compteurs correspondants que comporte ce dispositif ont été restaurés par les signaux transmis sur les lignes 58 et 60. A tout instant, le contenu d'un compteur correspond à une des coordonnées de l'élément d'image concerné. L'ensemble des sorties de ces compteurs constitue l'adresse de l'élément d'image. Ces sorties sont respectivement appliquées par les lignes 30 et 32 au circuit logique 34 de reconnaissance de position de la caractéristique du caractère (par exemple le centre du cadre) et au circuit logique de reconnaissance de caractères 36.

Une fois que la configuration formée des éléments d'image a été placée dans l'espace vidéo par la ligne 28, cette configuration appelée image est analysée pour déterminer le caractère qu'elle représente. La reconnaissance de ce caractère est fonction d'un alignement correct de l'image dans l'espace vidéo. Cet alignement correct constitue le sujet de la présente invention et sera décrit plus loin.

Le circuit logique 34 est également mis en service par les signaux de restauration présents sur la ligne 58 ou 60. Ce circuit logique permet de reconnaître la position d'une ou de plusieurs caractéristiques d'un caractère. Les versions du circuit logique 34 qui sont représentées sur les figures 3 et 4 permettent respectivement d'utiliser les techniques de reconnaissance de position de caractéristiques telles que le centre d'un cadre, à l'intérieur duquel se trouve le caractère ou le « centre de gravité » du caractère à examiner.

Dans le cas de la version représentée sur la figure 3, correspondant au cas où la caractéristique choisie du caractère est le centre du cadre circonscrit au caractère, on fait la moyenne des adresses des éléments d'image noirs le plus haut et le plus bas. En conséquence, les signaux qui apparaissent sur la ligne 56 représentent l'ordonnée $\Delta y$ d'un point, appelé centre du cadre, à l'intérieur duquel se situent les positions extrêmes du caractère à reconnaître. Cette technique est représentée sur la figure 7. Il est bien évident que pour la détermination de l'abscisse $\Delta x$ du centre du cadre, on procèdera de façon similaire en faisant intervenir les adresses extrêmes des éléments d'images noirs le plus à gauche et le plus à droite.

D'autres techniques peuvent être utilisées pour déterminer la distance qui sépare la caractéristique choisie du caractère, dans l'exemple choisi ici, le centre du cadre, du point de l'espace vidéo choisi comme origine.

Les composantes x et y de l'adresse d'un élément d'image transmises sur les lignes 30 et 32 ainsi que l'information vidéo sur la ligne 28, associée à cette adresse, sont également transmises au circuit logique de reconnaissance de caractères 36, figure 1. L'objet de ce circuit est de déterminer, à partir des emplacements des éléments d'image noirs et blancs dans l'espace vidéo, quel est le caractère qui, parmi un certain nombre de caractères possibles, est représenté. Comme précédemment, diverses techniques connues peuvent être employées comme équivalents fonctionnels. Le circuit logique 36 peut prendre la forme du dispositif représenté sur la figure 5, qui sera décrit plus loin.

Le processus de reconnaissance est déclenché lors de la réception par le circuit logique 36 d'un signal de restauration transmis par le calculateur d'erreurs 48 sur la ligne 64, comme le montre la figure 1. Les signaux de sortie de ce circuit logique 36 sont le signal « fin de reconnaissance » transmis sur la ligne 62, le signal « reconnaissance valable » transmis sur la ligne 38, ou, le cas échéant, le signal « erreur de reconnaissance » transmis sur la ligne 72, ainsi que le signal « numéro de reconnaissance » du caractère reconnu, ce dernier signal étant transmis sur la ligne 40 reliée au dispositif 42.

Ce dernier dispositif 42 assure la fonction normale de conversion de codes qui permet de convertir le code interne afférent au numéro de reconnaissance du caractère reconnu en un code externe d'échange d'informations, tel que le code ASCII, EBCDIC, etc., qui est transmis sur la ligne 70 aux circuits de commande opérateur/machine 68. Par ailleurs, pour chaque code interne, l'emplacement idéal, dans l'espace vidéo de la caractéristique choisie (par exemple le centre du cadre) a été déterminé au préalable et emmagasiné dans la mémoire inaltérable qui constitue l'essentiel du dispositif 42. Cette information relative à l'emplacement idéal de la caractéristique est transmise au calculateur d'erreurs 48 par l'intermédiaire des lignes 44 et 46. En conséquence, lorsque l'information afférente au caractère reconnu est transmise aux dispositifs externes, la position idéale de ce caractère est transmise au calculateur 48.

Le calculateur 48 commande l'ordre dans lequel les restaurations successives du système s'effectuent de même que leur nombre, afin qu'un positionnement optimum du caractère dans l'espace vidéo puisse être obtenu. Si aucune erreur n'existait, les deux compteurs 112 et 116 précédemment mentionnés du dispositif de segmentation 26 seraient restaurés, par l'intermédiaire des lignes 58 et 60, lorsqu'une valeur déterminée serait atteinte à partir de l'origine d'un espace vidéo donné. En cas d'erreur, c'est-à-dire de non concordance entre la coordonnée idéale et la coordonnée réelle, des valeurs leur sont ajoutées ou retranchées de telle sorte que les nouvelles références soient décalées de la valeur de l'erreur ou d'une fraction de celle-ci par rapport à la position correcte. De ce fait, l'alignement vertical et l'alignement horizontal d'un caractère ultérieur seront modifiés par l'erreur afférente au caractère que l'on est en train de reconnaître, les erreurs ne pouvant donc pas être cumulatives.

En fonctionnement normal, les corrections apportées sont peu considérables étant donné que seules de faibles variations d'un caractère à l'autre peuvent se produire. Si une erreur importante est signalée, il est extrêmement probable qu'une erreur a été commise dans le processus même de lecture du caractère par l'analyseur. Un signal d'erreur est transmis sur la ligne 66 aux circuits de commande 68. Normalement, ces derniers provoquent alors un nouveau balayage du caractère en question en transmettant une instruction appropriée à l'analyseur 12 sur la ligne 74.

Les fonctions précédemment décrites du dispositif 26 sont assurées par le matériel représenté sur la figure 2. Le dispositif 26 comprend deux parties identiques respectivement afférentes à des références verticale et horizontale.

La partie verticale contient un compteur 112 sans dépassement de capacité qui compte de zéro (l'état restauré) jusqu'à une valeur maximale (par exemple 63), le comptage étant alors interrompu jusqu'à la restauration suivante. Lorsqu'il n'est pas bloqué, le compteur est incrémenté par les signaux d'horloge transmis sur la ligne 22 et qui concernent les éléments d'image verticaux. Le compteur est mis en service lorsqu'il reçoit une impulsion de restauration émanant du calculateur d'erreurs 48 et transmise sur la ligne 60. Cette impulsion remet le compteur 112 à zéro et le compteur peut donc commencer à compter. Les 63 signaux d'horloge suivants (correspondant chacun à un élément d'image vertical) sont transmis sur les lignes de sortie 32 et l'adresse de chaque élément dans la coordonnée verticale (y) de l'espace vidéo est donnée par la combinaison des signaux de sortie présents sur les lignes 32.

La partie horizontale du dispositif 26 fonctionne de façon analogue, mais la capacité maximale du compteur 116 représentée par les signaux présents sur les lignes de sortie 30 est généralement choisie plus faible (par exemple, 31 au lieu de 63), pourvu que, dans tous les cas, l'espace vidéo contienne la totalité des caractères utilisés.

Une sortie vidéo n'est désirée que lorsque la région balayée se trouve à l'intérieur des limites de l'espace vidéo. Le signal, représentatif du niveau noir ou blanc des éléments d'image, transmis sur la ligne 23 par le convertisseur 16, est donc transmis par la porte ET 120, commandée par les compteurs 112 et 116 de telle sorte que la sortie vidéo apparaisse sur la ligne 28. Ainsi le dispositif 26 génère-t-il un signal vidéo, appelé parfois bit blanc/noir, sur la ligne 28, auquel est associée l'adresse du point examiné, définie par les coordonnées x (ligne 30) et y (ligne 32).

On a représenté sur la figure 3 une version du circuit logique 34 de la figure 1. Ce circuit logique 34 détermine les coordonnées du centre du cadre entourant les extrémités du caractère. Dans un but de simplicité, seule la partie relative aux informations verticales sera décrite ci-après, la partie horizontale étant analogue du point de vue de sa forme et de sa fonction.

De même que dans le cas du dispositif 26, la mise en service est déclenchée par la transmission sur la ligne 60 du signal de restauration émanant du calculateur d'erreurs 48 à l'origine 0-0 de l'espace vidéo. Ce signal remet les registres 214 et 220 à zéro. Les sorties de ces registres sont comparées avec l'adresse verticale (y) transmise par le dispositif 26 sur la ligne 32, cette opération étant effectuée par les comparateurs logiques 212 et 218. Si cette adresse est supérieure à celle contenue dans le registre 220, et que l'élément d'image soit un élément d'image noir, le contenu de ce registre est remplacé par l'intermédiaire de la porte ET 222, par la nouvelle adresse verticale. Dans le cas contraire, l'adresse contenue dans le registre 220 demeure dans celui-ci. Ainsi, à la fin de la lecture de l'espace vidéo, l'adresse verticale de l'élément d'image noir le plus haut de cet espace se trouve dans le registre 220. Le fonctionnement du registre 214 et de la porte ET 216 est analogue à celui qui vient d'être décrit, à l'exception du fait que, les sorties du comparateur 212 étant inversées, l'adresse de l'élément d'image noir le plus bas est dans le registre 214.

Les sorties des registres 214 et 220 sont ajoutées l'une à l'autre dans l'additionneur 224 et divisées par deux (grâce à un décalage dans les fils de sortie) dans le circuit 226. La sortie finalement disponible sur la ligne 56 est la demi-somme des éléments d'image noirs le plus haut et le plus bas ; elle représente l'ordonnée du centre du cadre ($\Delta y$).

Une seconde version du dispositif 34 est représentée sur la figure 4. Cette dernière version permet de déterminer le « centre de gravité » du caractère dans l'hypothèse où ce centre de gravité est pris comme caractéristique des caractères. Comme dans le cas de la figure 3, la mise en service est déclenchée par un signal de restauration transmis sur la ligne 60 par le calculateur d'erreurs 48 pour définir l'origine de l'espace vidéo. Chaque élément d'image noir provoque ensuite l'addition, dans l'additionneur 234, de l'information relative à l'adresse verticale qui est transmise sur la ligne 32 avec la somme des adresses provenant du registre 232, le résultat de cette addition étant ensuite transmis au registre 232. Le nombre total d'éléments d'image noirs est compté par le compteur 230. La coordonnée verticale du « centre de gravité » peut donc être déterminée en divisant l'adresse obtenue à la sortie du registre 232 par la valeur du contenu du compteur 230, cette opération étant effectuée par le diviseur 236. La sortie (Δy) de ce dernier est transmise sur la ligne 56.

Comme précédemment, le circuit logique afférent à la partie horizontale est analogue au circuit logique précédent en ce qui concerne sa forme et sa fonction.

On a représenté sur la figure 5 le circuit logique de reconnaissance de caractères 36. Dans ce circuit, on utilise la technique de reconnaissance connue qui consiste à comparer en parallèle un mot avec masque et à reconnaître le mot d'après le masque avec lequel il y a la plus grande correspondance. Le système comprend deux emplacements de mémoire pour chaque élément d'image de l'espace vidéo, pour chaque caractère à reconnaître. Deux masques, l'un appelé masque blanc, l'autre masque noir sont prévus pour chaque caractère. Si, par exemple, il y a n/2 caractères, il y aura n masques, ou n mémoires inaltérables (ROM 1, ..., ROM n) de l'ensemble de mémoire 314.

L'information vidéo, sous la forme d'un bit indicatif d'un élément d'image blanc ou noir, désigné bit blanc/noir circulant sur la ligne 28, est ajoutée dans le décodeur 312 aux coordonnées x, y sur les lignes 30 et 32. Ce bit joue le rôle d'un bit d'adresse supplémentaire de sorte qu'on peut adresser le double des adresses de l'espace vidéo, c'est-à-dire que l'on double le produit 63 × 31. Ce bit permet de définir quel emplacement de mémoire doit être adressé ; il indique s'il faut adresser le masque noir ou le masque blanc.

Si ce bit blanc/noir est utilisé comme le bit d'adresse le moins significatif, alors le bloc mémoire est divisé en deux groupes de mémoires, entrelacés, désignés groupe pair et groupe impair. Les adresses impaires, se terminant par le bit « 1 » concernent un masque noir, celles s'achevant par « 0 » concernent un masque blanc. Ceci signifie que les emplacements de mémoire d'un groupe impair contiennent, pour chaque élément d'image d'un caractère, un « 1 » quand il y a une forte probabilité pour que cet élément d'image soit noir, et contiennent un « 0 » quand cette probabilité est faible. D'où le nom parfois donné de masque « noir/peu importe ». De même, les emplacements de mémoire du groupe pair contiennent, pour chaque élément d'image d'un caractère, un « 1 » quand il est fort probable que cet élément d'image soit blanc, et un « 0 » quand cette probabilité est faible.

Pendant le processus de reconnaissance de caractère, seuls quelques emplacements de mémoire correspondant à quelques éléments d'images d'un caractère sont sélectionnés, ce sont les emplacements de mémoire qui ont la plus forte probabilité de permettre l'identification d'un caractère, tandis que les autres emplacements de mémoire sont écartés.

La mémoire est programmée de telle sorte que le mot comportant le plus grand nombre de « 1 » en sortie corresponde au caractère à reconnaître.

A chaque masque correspond un nombre différent d'adresses de points permettant de prendre la décision : par exemple, le masque relatif au caractère « 1 » demande la sélection de 60 points, tandis que celui relatif au « 0 » requiert 200 points.

Les mémoires sont adressées en parallèle au moyen d'un ensemble de signaux provenant du décodeur d'adresse 312.

A chaque mémoire est associé un ensemble de compteurs (316) comprenant les compteurs référencés COMPTEUR 1, ..., COMPTEUR n. Le mot qui comporte le plus grand nombre de « 1 » en sortie, c'est-à-dire celui pour lequel il y a le plus grand nombre de points de correspondances, voit le plus grand nombre de « 1 » être emmagasiné dans un des compteurs 316 ; ce mot correspond au caractère à reconnaître. L'ensemble 316 de compteurs est restauré au moyen d'un signal sur la ligne 64 lorsque le balayage revient à l'origine de l'espace vidéo.

Pour un caractère correctement reconnu, un et un seul des compteurs de l'ensemble 316 a son dernier étage activé. Les sorties des compteurs sont appliquées en parallèle au convertisseur 42 et à un circuit logique d'erreur 318. Ce dernier, qui est de type classique, détermine sur la ligne 62 si une et une seule des sorties des compteurs de l'ensemble 316 est activée à l'instant où la reconnaissance est rendue possible en raison de l'apparition d'un signal d'adresse d'élément d'image de niveau haut. Si plus d'une sortie est activée, cela signifie qu'une erreur a été commise (c'est-à-dire que deux caractères, ou davantage, ont été reconnus pour une même entrée) et cette condition d'erreur est transmise par l'intermédiaire de la ligne 72 au circuit de commande 68.

La figure 6 représente une réalisation logique du calculateur d'erreurs 48. Le compteur 428 fournit une sortie sur la ligne 60 lorsqu'il reçoit le même nombre d'impulsions d'entrée qu'il existe d'éléments d'image verticaux (par exemple 128) dans l'ensemble de la région balayée par l'analyseur 12. Si aucune erreur ne s'est produite, et si le compteur a été mis à zéro au début d'un balayage, sa sortie apparaît sur la ligne 60 au début de chaque balayage en raison de la transmission par le circuit OU 426 de l'impulsion d'horloge afférente à l'élément d'image vertical qui est transmis sur la ligne 22.

Lors de l'apparition sur la ligne 62 d'un signal « fin de reconnaissance » valable, le signal Δy provenant du circuit logique 34 et transmis sur la ligne 56 est chargé dans le registre-compteur 412. Simultanément, la coordonnée y idéale ΔY' afférente au caractère que l'on est en train de reconnaître et qui est transmise sur la ligne 46 depuis la mémoire du dispositif 42 (figure 1) est chargée dans le registre 414. Les sorties des registres 412 et 414 font l'objet d'une comparaison logique dans le comparateur 416. Si la valeur effective ΔY ne coïncide pas avec la valeur idéale ΔY', le compteur 412 procède à un comptage progressif, ou dégressif, par l'intermédiaire des portes ET 418 et 420, jusqu'à ce que la différence devienne nulle. Les impulsions appliquées au compteur 412 sont également appliquées au compteur 428 indépendamment des signaux d'horloge afférents aux éléments d'image verticaux. Ces impulsions ont pour effet d'augmenter, ou de diminuer, la durée de la sortie présente sur la ligne 60 par rapport au début du balayage. Etant donné que la sortie présente sur la ligne 60 provoque la restauration du compteur 112 de la figure 2, pour définir l'origine y de l'espace vidéo, cette dernière est décalée vers le haut ou vers le bas du nombre d'unités ajoutées à la valeur du compteur 428 ou soustraites de celle-ci. Le nombre de ces unités qui est nécessaire pour obtenir une correspondance des valeurs des registres 412 et 414 peut être accumulé dans le compteur 424 à travers le circuit OU 422. Si l'erreur est excessive pour un caractère correctement reconnu, on engendre un signal d'erreur transmis sur la ligne 66 pour contraindre l'analyse 12 à effectuer un nouveau balayage et/ou pour faire en sortie qu'aucun compte ne soit tenu du caractère reconnu, lors du traitement ultérieur.

La forme et la fonction de la partie horizontale du calculateur d'erreurs 48 sont analogues à celles de la partie verticale. Toutefois, la longueur du compteur horizontale permet d'obtenir sur la ligne 58 de la figure 1 une sortie afférente à la distance de segmentation (c'est-à-dire à la distance séparant les caractères). Etant donné que cette impulsion de sortie indique également le début du caractère suivant, elle est utilisée pour restaurer les compteurs dans le reste du système (par exemple, les circuits logiques 34 et 36 de la figure 1). Entre autres possibilités, on peut évidemment pré-régler le compteur 428 pour prédéterminer l'origine de l'espace vidéo lors de la mise en route du système ; modifier la correction effectuée pour une erreur donnée (par exemple, ne corriger que la moitié de l'erreur ou d'un élément d'image/caractère) ; filtrer la correction apportée à l'erreur de manière à simuler une boucle à phase bloquée ; et n'utiliser l'erreur que pour faciliter la reconnaissance au lieu de s'en servir pour modifier les coordonnées d'origine de l'espace vidéo.

**Revendications**

1. Dispositif permettant l'alignement automatique du caractère à reconnaître à partir d'informations dérivées de la reconnaissance du caractère précédent dans un système de reconnaissance de caractères et comportant des moyens (12, 16) pour convertir un caractère balayé en une suite d'éléments d'image noirs et blancs aux fins de la reconnaissance de caractères individuels, ledit dispositif étant caractérisé en ce qu'il comprend :

des moyens logiques (34) pour mesurer les coordonnées d'au moins une caractéristique d'alignement (centre du cadre) choisie appartenant au caractère à reconnaître inscrit dans une région discrète donnée (espace vidéo),

des moyens de mémorisation (42) emmagasinant les coordonnées idéales de cette même caractéristique d'alignement pour chaque caractère à reconnaître,

des moyens logiques de calcul (48) pour calculer les différences entre les coordonnées mesurées et les coordonnées idéales afférentes à la caractéristique d'alignement du caractère à reconnaître, et

des moyens (26) pour ajuster les coordonnées de la caractéristique d'alignement du caractère à reconnaître suivant en fonction des différences calculées entre coordonnées mesurées et coordonnées idéales afin d'aligner les caractères suivants.

2. Dispositif selon la revendication 1, caractérisé en ce qu'il comprend un ensemble de mémoires (314) inaltérables, dans chacune desquelles se trouve enregistré un masque contenant un mot associé à chaque caractère à reconnaître, et un ensemble correspondant (316) de compteurs,

ledit ensemble de mémoires (314) étant programmé de manière à ne reconnaître un caractère que lorsque le mot comportant le plus grand nombre de « 1 » correspond au caractère à reconnaître, et

lesdits compteurs (316) accumulant les « 1 » provenant desdites mémoires (314) pour reconnaître le caractère lorsque le dernier étage de l'un desdits compteurs est activé.

3. Dispositif selon la revendication 1, caractérisé en ce que lesdites régions discrètes sont des espaces vidéo formés autour des extrémités horizontales et verticales de chaque caractère à reconnaître.

4. Dispositif selon l'une des revendications 1 à 3, caractérisé en ce qu'il comprend également une mémoire inaltérable (42) pour convertir des informations codées afférentes à un caractère interne reconnu (40) en un code externe (70) utilisable par des dispositifs associés (68).

5. Dispositif selon l'une des revendications 1 à 4, caractérisé en ce que les moyens (34), pour déterminer les coordonnées de la caractéristique d'alignement d'un caractère à reconnaître, emmagasinent les valeurs extrêmes des coordonnées horizontales et verticales de chacune des régions discrètes contenant le caractère à reconnaître et font la moyenne de ces deux valeurs extrêmes.

6. Dispositif selon l'une des revendications 1 à 4, caractérisé en ce que les coordonnées de la caractéristique d'alignement du caractère à reconnaître sont déterminées en emmagasinant les adresses de chacun des éléments d'image noirs de ladite suite des éléments et en divisant la somme des adresses par le nombre total d'éléments d'images noirs que comporte ladite suite d'éléments d'image.

7. Dispositif selon la revendication 5 ou 6, caractérisé en ce qu'il comprend (42) également des registres pour emmagasiner les adresses des coordonnées horizontales et verticales de chaque région discrète, la valeur moyenne desdites adresses étant déterminée pour obtenir la valeur des coordonnées idéales de la caractéristique d'alignement du caractère à reconnaître.

8. Dispositif selon l'une des revendications 1 à 7, caractérisé en ce que les différences entre les coordonnées mesurées Δx, Δy et les coordonnées idéales Δ'x, Δ'y de la caractéristique d'alignement du caractère à reconnaître sont calculées dans le calculateur d'erreurs (48) en comparant les coordonnées mesurées horizontales et verticales qui sont accumulées et provisoirement emmagasinées (34) avec les coordonnées idéales horizontales et verticales préalablement emmagasinées et fournies par lesdits moyens (42) permettant d'emmagasiner les coordonnées de la caractéristique d'alignement idéales, le calculateur d'erreur (48) comprenant en outre un premier compteur (412) pour accumuler le nombre de comptages requis pour obtenir une concordance entre lesdites coordonnées mesurées et idéales, et un second compteur (428) pour compter les différences, tant horizontales que verticales, entre lesdites coordonnées mesurées et idéales.

9. Dispositif selon la revendication 8, caractérisé en ce que la valeur du premier compteur (412) servant à accumuler le nombre de comptages constitue une indication de l'erreur d'alignement de la caractéristique d'alignement du caractère dans l'espace vidéo.

10. Dispositif selon la revendication 8, caractérisé en ce que la sortie du second compteur (428) servant à compter les différences fournit des valeurs de correction d'erreur d'alignement horizontale et verticale servant à répartir les éléments d'image en des régions discrètes aux fins de la reconnaissance, de manière à favoriser l'alignement du caractère à reconnaître suivant.

11. Dispositif selon l'une quelconque des revendications précédentes, caractérisé en ce que le calculateur d'erreur (48) calcule les différences entre les coordonnées mesurées et les coordonnées idéales de la caractéristique d'alignement du caractère à reconnaître et engendre un signal de rejet (66), si lesdites coordonnées mesurées diffèrent des coordonnées idéales d'une valeur prédéterminée.

## Claims

1. Adaptive alignment of the pattern to be recognized by means of information derived from the prior recognized pattern for a pattern recognition system including means (12, 16) for converting a scanned pattern into a series of black and white picture elements in order to recognize individual patterns, characterized in that it includes :

logic means (34) for measuring the coordinates of at least a selected alignment feature (center of the box) typical of the pattern to be recognized within a given discrete field (video space),

means (42) for storing the ideal coordinates of at least the same alignment feature for each pattern to be recognized,

logic means (48) for computing the differences between the measured coordinates and the ideal coordinates relative to said alignment feature of the pattern to be recognized,

means (26) for adjusting the coordinates of the alignment feature of the subsequent pattern to be recognized according to the differences between the measured coordinates and the ideal coordinates in order to align the subsequent patterns.

2. Adaptive alignment according to claim 1 characterized in that it includes an array of read only memory units (314) in each one of which is recorded a mask containing a word associated to each pattern to be recognized and a corresponding array (316) of counters,

said array of read-only memory units (314) being programmed to recognize a pattern only when the word with the highest number of 1's corresponds to the pattern to be recognized,

said counters (316) accumulating the 1's issued by the read-only memory units (314) in order to recognize a pattern when one of said counters has its last stage energized.

3. Adaptive alignment according to claim 1 characterized in that said discrete fields are video spaces formed around the horizontal and vertical extremities of each pattern to be recognized.

4. Adaptive alignment according to one of claims 1 to 3 characterized in that it further includes a read-only memory unit (42) for converting coded information relative to an internal recognized pattern (40) into an external code (70) suitable for associated equipment (68).

5. Adaptive alignment according to one of claims 1 to 4 characterized in that said logic means (34) for defining the coordinates of the alignment feature of the pattern to be recognized store the extreme values of the horizontal and vertical coordinates of each discrete field containing the pattern to be recognized and average both extreme values.

6. Adaptive alignment according to one of claims 1 to 4 characterized in that the coordinates of the alignment feature of the pattern to be recognized are defined by storing the addresses of each of the black picture elements of said series of picture elements and dividing the sum of the addresses by the total number of black picture elements of said series.

7. Adaptive alignment according to claim 5 or 6 characterized in that it further includes (42) registers for storing the addresses of both horizontal and vertical coordinates of each discrete field, the average value of said addresses being defined so as to obtain the value of the ideal coordinates of the alignment feature of the pattern to be recognized.

8. Adaptive alignment according to one of claims 1 to 7 characterized in that the differences between the measured coordinates Δx and Δy and the ideal coordinates Δ'x and Δ'y of the alignment feature of the pattern to be recognized are calculated in the error computer (48) by comparing the horizontal and vertical measured coordinates which are accumulated and temporarily stored (34) with the ideal horizontal and vertical coordinates which were prior stored and issued by said means (42) for storing the ideal coordinates of the alignment feature, where the error computer further includes a first counter (412) to accumulate the number of counts required to come to an agreement between said measured and ideal coordinates and a second counter (428) to count both horizontal and vertical differences between said measured and ideal coordinates.

9. Adaptive alignment according to claim 8 characterized in that the value calculated by said first counter (412) for accumulating the number of counts is an indication of the alignment error of the pattern in the video space.

10. Adaptive alignment according to claim 8 characterized in that the output of said second counter (428) for counting the differences imparts horizontal and vertical error alignment correction values used to divide the picture elements into discrete fields for recognition to enhance the alignment of the subsequent pattern.

11. Adaptive alignment according to any one of prior claims characterized in that the error computer (48) defines the differences between measured and ideal coordinates of the alignment feature of the pattern to be recognized and issues a reject signal (66) if said measured coordinates differ from said ideal coordinates by a predetermined value.

## Ansprüche

1. Vorrichtung zum selbsttätigen Ausrichten des zu erkennenden Zeichens in einem Zeichenerkennungssystem anhand von der von der Erkennung des vorhergehenden Zeichens abgeleiteten Information, die Mittel (12, 16) zur Auflösung eines abgetasteten Zeichens in eine Reihe von schwarzen und weißen Bildelementen zum Zwecke der Erkennung der einzelnen Zeichen aufweist, wobei die Vorrichtung dadurch gekennzeichnet ist, daß sie enthält :

logische Mittel (34) zur Messung der Koordinaten von mindestens einem ausgewählten Ausrichtungsmerkmal (Zentrum des Bildrasters), das dem zu erkennenden in einem einzelnen bestimmten Feld (Lesefeld) vorliegenden Zeichen gehört,

Mittel (42) zum Speichern der idealen Koordinaten desselben Ausrichtungsmerkmals für jedes zu erkennende Zeichen,

logische Mittel (48) zum Rechnen der Differenzen zwischen den ausgewerteten und den idealen Koordinaten, die das Ausrichtungsmerkmal von dem zu erkennenden Zeichen betrifft,

Mittel (26) zur Anpassung der Koordinaten des Ausrichtungsmerkmals des zu erkennenden Zeichens in Abhängigkeit von den berechneten Differenzen zwischen den ausgewerteten und den idealen Koordinaten, um die folgenden Zeichen auszurichten.

2. Vorrichtung nach Anspruch 1, dadurch gekennzeichnet, daß sie eine Gruppe von Festwertspeicherzellen (314), von denen sich in jeder eine Maske befindet, die ein Wort enthält, das einem jeweiligen zu erkennenden Zeichen zugeordnet ist, eingetragen ist und eine entsprechende Gruppe (316) von Zählern aufweist,

wobei die Gruppe von Festwertspeicherzellen (314) so programmiert ist, daß ein Zeichen erst erkannt wird, wenn das Wort mit der höchsten Anzahl von Einsen dem zu erkennenden Zeichen entspricht und

wobei die Zähler (316), die die von den Speicherzellen (314) ermittelten Einsen zum Zwecke der Erkennung des Zeichens summiert, wenn die letzte Stufe eines der genannten Zähler aktiviert ist.

3. Vorrichtung nach Anspruch 1, dadurch gekennzeichnet, daß die einzelnen Felder Lesefelder sind, die um die horizontalen und vertikalen Endpunkte jedes zu erkennenden Zeichens gebildet sind.

4. Vorrichtung nach einem der Ansprüche 1 bis 3, dadurch gekennzeichnet, daß sie auch einen Festwertspeicher (42) zur Umsetzung der ein internes erkanntes Zeichen (40) betreffenden kodierten Information in einen externen Kode (70), der von ausgeschlossenen Anlagen (68) verwendet werden kann, aufweist.

5. Vorrichtung nach einem der Ansprüche 1 bis 4, dadurch gekennzeichnet, daß die Mittel (34) zur Ermittlung der Koordinaten des Ausrichtungsmerkmals eines zu erkennenden Zeichens, die Extremwerte der horizontalen und vertikalen Koordinaten von jedem einzelnen, das genannte zu erkennende Zeichen enthaltenden Felde speichern und den Durchschnitt der beiden Extremwerte berechnen.

6. Vorrichtung nach einem der Ansprüche 1 bis 4, dadurch gekennzeichnet, daß die Koordinaten des dem zu erkennenden Zeichen gehörenden Ausrichtungsmerkmals festgestellt werden, indem die Adressen jedes schwarzen und weißen in der jeweiligen Reihe enthaltenen Bildelements eingespeichert und die Gesamtsumme der Adressen durch die Gesamtanzahl der in der jeweiligen Reihe enthaltenen schwarzen Bildelementen dividiert werden.

7. Vorrichtung nach Anspruch 5 oder 6, dadurch gekennzeichnet, daß sie (42) auch Register zur Speicherung der Adressen von den horizontalen und vertikalen Koordinaten jedes einzelnen Feldes aufweist, wobei der Durchschnittswert der Adressen berechnet wird, um den Wert der idealen Koordinaten des dem zu erkennenden Zeichen gehörenden Ausrichtungsmerkmals zu ermitteln.

8. Vorrichtung nach einem der Ansprüche 1 bis 7, dadurch gekennzeichnet, daß in einem Fehlercomputer (48) die Differenzen zwischen den ausgewerteten Koordinaten $\Delta'x$, $\Delta'y$ und den idealen Koordinaten $\Delta x$, $\Delta y$ des zu dem erkennenden Zeichen gehörenden Ausrichtungsmerkmals durch Vergleich der summierten und zeitweilig gespeicherten ausgewerteten horizontalen und vertikalen Koordinaten mit den vorher gespeicherten und von den genannten Mitteln (42) ermittelten idealen horizontalen und vertikalen Koordinaten berechnet werden, wobei der Fehlercomputer (48) außerdem einen ersten Zähler (412) zur Akkumulierung der Anzahl der Zählungen, die erforderlich sind, um eine Übereinstimmung der ausgewerteten horizontalen und vertikalen Koordinaten zu kommen, und einen zweiten Zähler (428), um die Anzahl der ebenso horizontalen wie vertikalen Differenzen der ausgewerteten und idealen Koordinaten zu summieren, aufweist.

9. Vorrichtung nach Anspruch 8, dadurch gekennzeichnet, daß der Wert im ersten, zur Akkumulierung der Anzahl von Zählungen dienenden Zählers (412) ein Hinweis auf den Fehler ist, der das Ausrichtungsmerkmal des in dem Lesefeld vorliegenden Zeichens betrifft.

10. Vorrichtung nach Anspruch 8, dadurch gekennzeichnet, daß die Ausgabe des Zählers (428) zur Summierung der Differenzen Werte zum Korrigieren der Fehler von horizontaler und vertikaler Ausrichtung mitteilt, wo die Felder zum Zwecke der Zeichenerkennung zur Aufteilung der Bildelemente in einzelne Werte dienen, um so die Ausrichtung des folgenden zu erkennenden Zeichens zu verbessern.

11. Vorrichtung nach irgendeinem der vorhergehenden Ansprüche, dadurch gekennzeichnet, daß der Fehlercomputer (48) die Differenzen zwischen den ausgewerteten und idealen Koordinaten des dem zu erkennenden Zeichen zugehörigen Ausrichtungsmerkmals berechnet und ein Rückweisungssignal (66) abgibt, wenn die ausgewerteten Koordinaten um einen vorbestimmten Wert von den idealen Koordinaten verschieden sind.

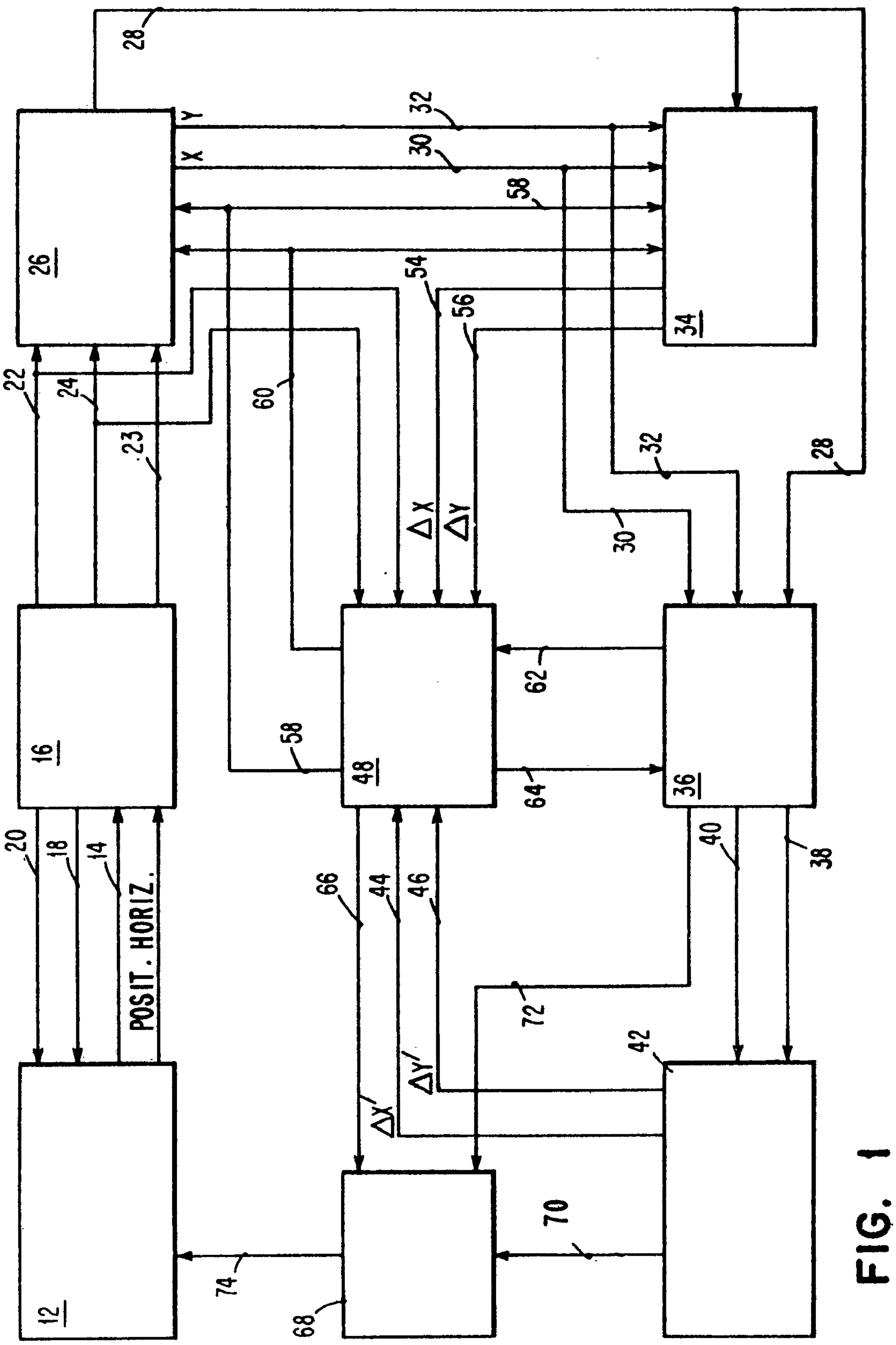
26
16
12
34
36
48
42
68
Y
X
28
32
30
58
54
56
60
22
24
23
20
18
14
POSIT. HORIZ.
ΔX
ΔY
62
64
40
38
66
44
46
72
ΔX'
ΔY'
70
74

FIG. 1

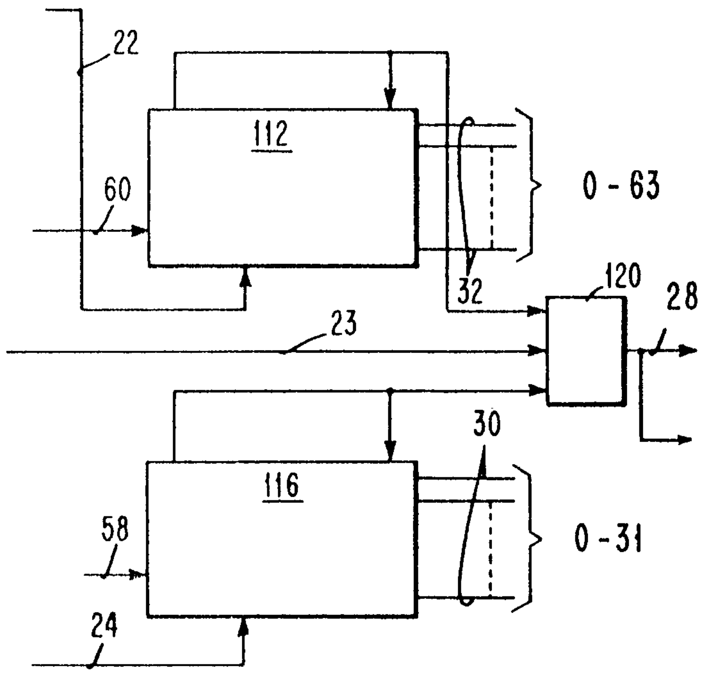
22
112
60
0 - 63
32
120
28
23
30
116
58
0 - 31
24

FIG. 2

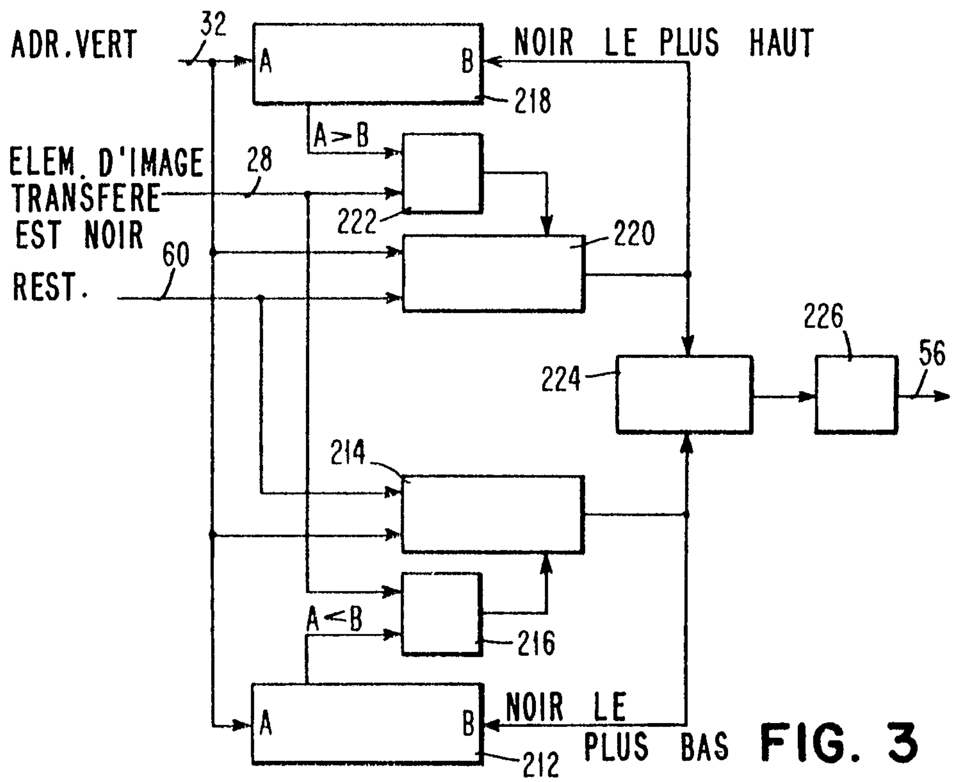
ADR. VERT
32
A
B
NOIR LE PLUS HAUT
218
A>B
ELEM. D'IMAGE TRANSFERE EST NOIR
28
222
220
60
REST.
226
56
224
214
216
A<B
A
B
NOIR LE PLUS BAS
212

FIG. 3

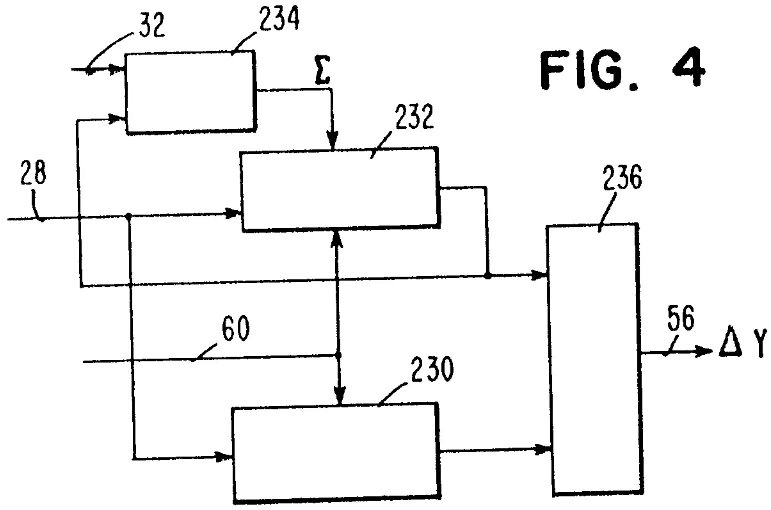
32
234
Σ
232
28
236
60
56
ΔY
230

FIG. 4

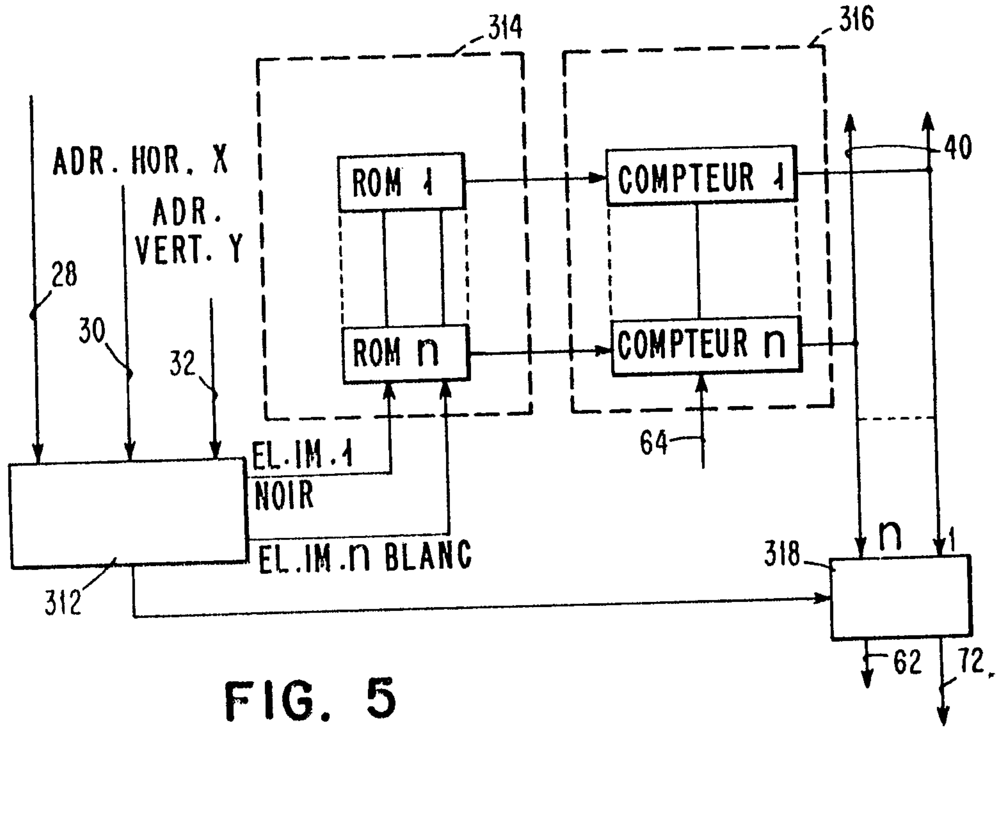
314
316
ADR. HOR. X
ADR. VERT. Y
ROM 1
COMPTEUR 1
40
28
30
32
ROM n
COMPTEUR n
64
EL.IM.1
NOIR
EL.IM.n BLANC
312
318
n
1
62
72

FIG. 5

FIG. 6

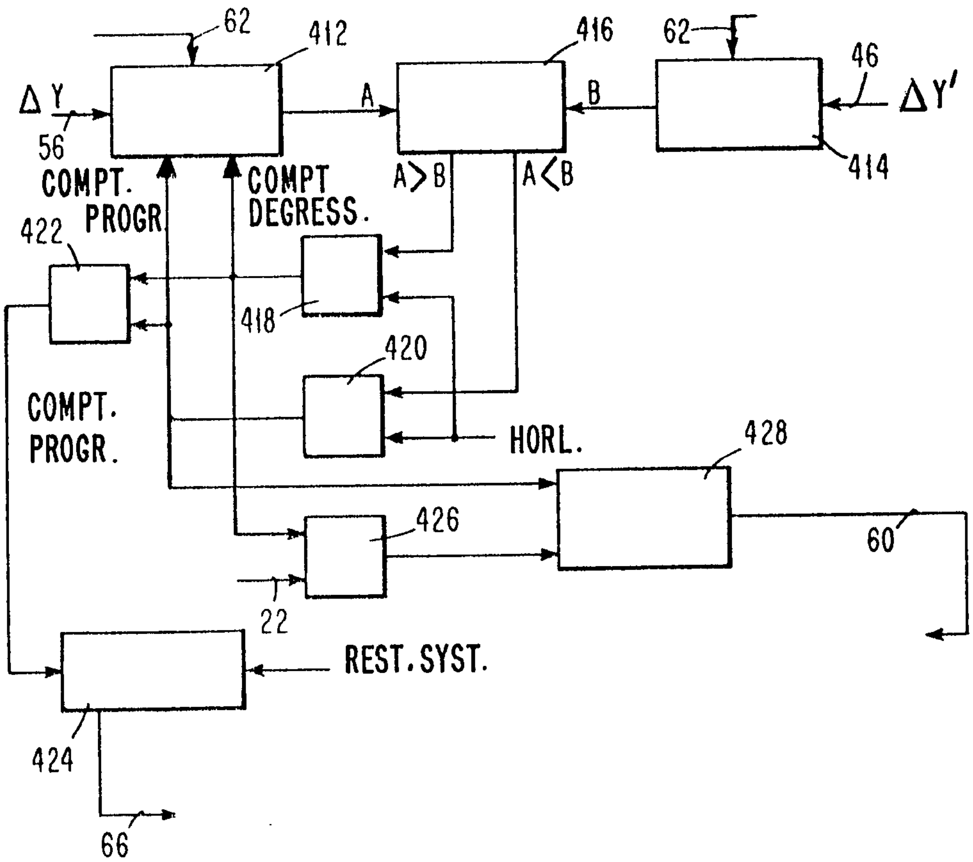

62
412
416
62
46
ΔY
ΔY'
56
A
B
414
COMPT.
PROGR.
COMPT
DEGRESS.
A>B
A<B
422
418
420
COMPT.
PROGR.
HORL.
428
426
60
22
REST. SYST.
424
66

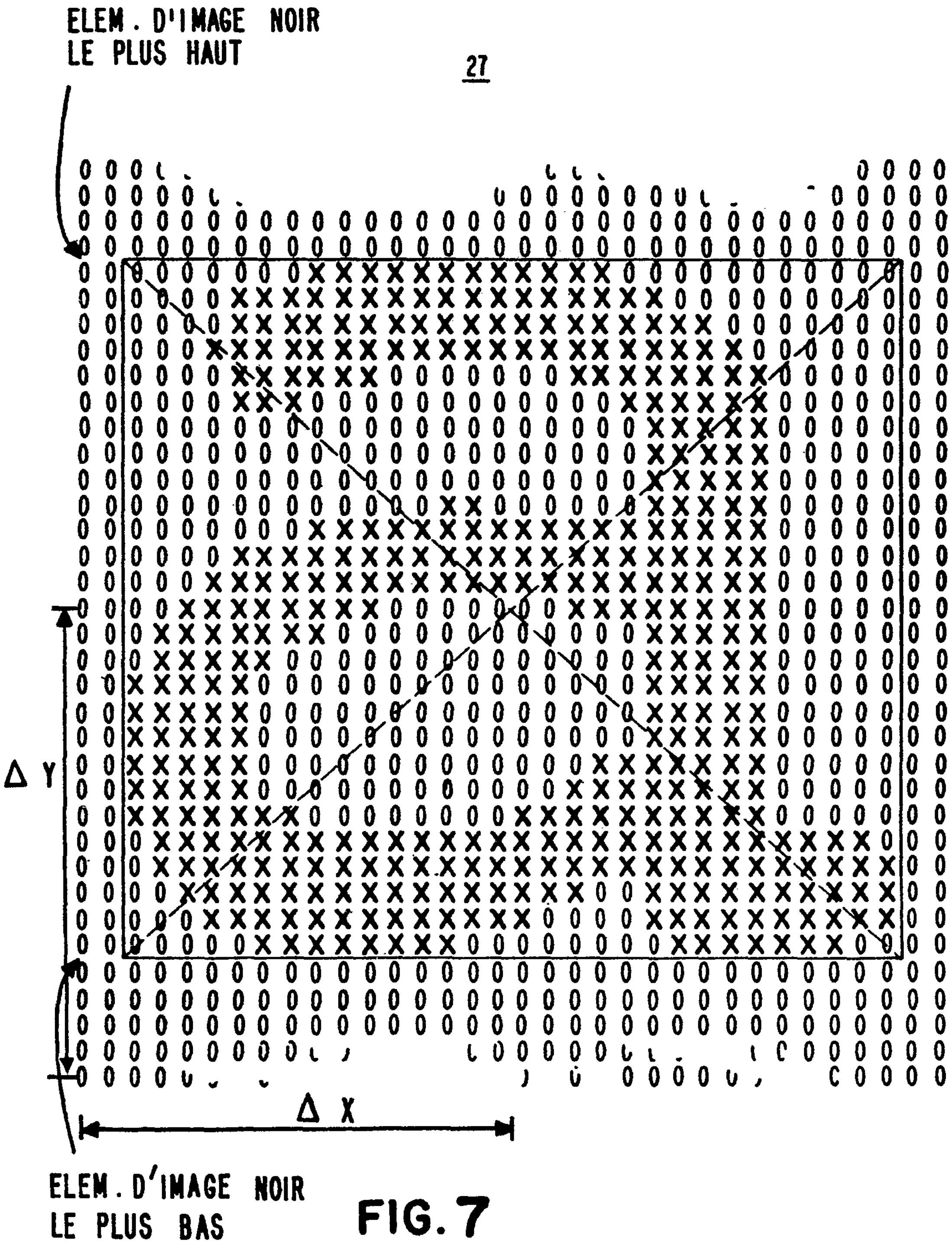
ELEM. D'IMAGE NOIR
LE PLUS HAUT
27
Δ Y
Δ X
ELEM. D'IMAGE NOIR
LE PLUS BAS

FIG. 7